# EUROPÄISCHE PATENTSCHRIFT

(11) **EP 3 786 434 B1**
(45) Veröffentlichungstag und Bekanntmachung des Hinweises auf die Patenterteilung: **05.11.2025**
(21) Anmeldenummer: 20201426.2
(22) Anmeldetag: 06.03.2009
(51) Int. Cl.: F02D 41/00, F02D 41/38, G07C 5/00, F02D 19/06, F02D 19/08, F02D 41/28, F02D 41/22, F02D 41/40

(54) **BESTIMMEN DER KRAFTSTOFFEIGENSCHAFTEN UND DEREN EINFLUSS AUF DIE ABGASEMISSIONEN WÄHREND DES BETRIEBS EINER BRENNKRAFTMASCHINE**
DETERMINATION OF FUEL PROPERTIES AND THEIR INFLUENCE ON EXHAUST EMISSIONS DURING COMBUSTION ENGINE OPERATION
DÉTERMINATION DES PROPRIÉTÉS DU CARBURANT ET DE LEUR INFLUENCE SUR LES ÉMISSIONS DE GAZ D'ÉCHAPPEMENT LORS DU FONCTIONNEMENT D'UN MOTEUR À COMBUSTION INTERNE

(30) Priorität: 27.05.2008 DE 102008025350
(43) Veröffentlichungstag der Anmeldung: 03.03.2021
(62) Teilanmeldung aus: 09003258.2
(73) Patentinhaber: MAN Truck & Bus SE, 80995 München (DE)
(72) Erfinder: Döring, Andreas, 80995 München (DE)
(74) Vertreter: v. Bezold & Partner Patentanwälte - PartG mbB

(56) Entgegenhaltungen:
- EP-A1- 2 037 112
- EP-A2- 1 775 584
- WO-A1-2005/021952
- WO-A1-2008/007128
- DE-A1- 10 327 978
- JP-A- 2008 008 234

## Beschreibung

Alternative und synthetische Kraftstoffe, wie Fettsäuremethylester (FAME), Pflanzenöl, verflüssigte Biomasse (Biomass-to-liquid (BTL)), verflüssigte Gase (Gas-to-liquid (GTL)) etc., gewinnen immer mehr an Bedeutung. Sie unterscheiden sich allerdings in ihren Stoffeigenschaften wie Dichte, Viskosität, Heiz- und Brennwert, Wärmekapazität, Aromatengehalt, Sauerstoffgehalt, Wasserstoffgehalt, Kohlenstoffgehalt, anorganischen Verunreinigungen (Alkalimetalle, Erdalkalimetalle), Phosphorgehalt, Schwefelgehalt, Lagerfähigkeit, Siedetemperatur und Schallgeschwindigkeit etc. meist von den genormten und zugelassenen Standardkraftstoffen, die für die Motorauslegung und Motorabnahme verwendet bzw. vom Gesetzgeber vorgeschrieben werden.

Dies führt dazu, dass, wenn die Brennkraftmaschinen mit diesen Nicht-Standard-Kraftstoffen betrieben werden, sich die Emissionen, die Abgastemperaturen, die maximale Motorleistung und die Zylinderspitzendrücke verändern können.

Durch die veränderten Abgasemissionen werden eventuell die gesetzlich vorgeschriebenen Grenzwerte überschritten. So steigen beispielsweise bei der Verwendung von FAME die NOₓ-Emissionen an, während die Partikelemissionen absinken.

Sinken die Abgastemperaturen auf Grund eines abweichenden Brennwertes oder Zündverzugs, kann es bei Einsatz von Katalysatoren dazu kommen, dass deren Anspringtemperaturen nicht mehr oder seltener erreicht werden, wodurch sich ebenfalls eine Verschlechterung der Emissionen ergibt. Demgegenüber kann ein Ansteigen der Abgastemperaturen zu einer thermischen Schädigung der Katalysatoren führen.

Gleichzeitig kommt es beim Einsatz von "Biokraftstoffen" durch den erhöhten Eintrag von Alkali- und Erdalkalimetallen, Phosphor und Schwefel zu einer beschleunigten chemischen Deaktivierung der Katalysatoren zur Abgasnachbehandlung.

Da das Kraftstoffsystem und der Motorölkreislauf meist nicht hermetisch voneinander getrennt sind, führt dies zu einer Vermischung von Kraftstoff und Motoröl. Durch den Einsatz von nicht zugelassenem Kraftstoff kommt es daher zu einer unkontrollierbaren Veränderung der Stoffeigenschaften des Motoröls, was wiederum zu einer Schädigung des Motors führen kann.

Um dies zu erkennen und gegebenenfalls reagieren zu können, wäre es sinnvoll, die Kraftstoffeigenschaften während des Betriebs zu bestimmen.

In DE 103 46 314 A1 ist ein gattungsgemäßer Sensor beschrieben, mit dessen Hilfe die Viskosität des Kraftstoffs ermittelt werden kann. Hierfür wird der Kraftstoff über einen Aktuator in Schwingungen versetzt und diese Schwingungen von einem Drucksensor detektiert. Durch die Auswertung des Druckverlaufs kann die Viskosität bestimmt werden. Der Nachteil dieses Verfahrens besteht in der Notwendigkeit eines Aktuators, der die Kosten und den Wartungsaufwand erhöht.

In DE 101 52 236 A1, DE 102 17 376 A1 und DE 102 17 379 A1 sind Verfahren beschrieben, mit dem die Kraftstoffeigenschaften aus dem Dampfdruck des Kraftstoffs bestimmt werden. Hierfür wird der Dampfdruck im Kraftstoffbehälter und/oder dem Kraftstoffsystem ermittelt. Dazu ist es zwingend notwendig, dass der Motor keinen Kraftstoff aus dem Kraftstoffsystem entnimmt, d.h. der Motor muss abgestellt werden. Daher ist dieses Verfahren bei Motoren, bei denen ein Abstellen nicht möglich ist, wie z.B. bei Motoren für Stromaggregate, Blockheizkraftwerke, Kompressoren etc., nicht einsetzbar. Zudem ist es zur Bestimmung des Dampfdrucks notwendig, das Volumen, in dem die Druckmessung vorgenommen wird, gegenüber der Umgebung abzutrennen, bzw. sogar einen leichten Unterdruck in diesem Volumen zu erzeugen. Dies macht den Einsatz von Absperrventilen und/oder Vakuumpumpen notwendig, was hohe Kosten und einen entsprechend hohen Wartungsaufwand zur Folge hat.

In DE 100 15 162 A1 wird ein Verfahren beschrieben, in dem das Verbrennungsgeräusch detektiert und daraus die Qualität der Einspritzung, d.h. der Einspritzbeginn oder die Einspritzrate, bestimmt wird. Der Nachteil dieses Verfahrens besteht darin, dass das Verbrennungsgeräusch nicht zur Ermittlung des verwendeten Kraftstoffs herangezogen werden kann, da es zusätzlich von mehreren anderen Faktoren, wie z. B. den Toleranzen, dem Verschmutzungsgrad oder Verschleiß der Einspritzdüse, der Einspritzpumpe, den Einlassventilen, den Auslassventilen, dem Abgasturbolader etc. beeinflusst wird. Da das Verbrennungsgeräusch in hohem Maße von der freigesetzten Energie abhängt, gestattet dieses Verfahren, auf Grund der üblicherweise volumetrischen Zugabe von Kraftstoff in den Brennraum, nur die Bestimmung des volumetrischen Heizwertes, des Spritzbeginns oder der Einspritzrate mit ausreichender Genauigkeit, die Bestimmung der Viskosität oder Kompressibilität ist nicht möglich, demzufolge auch keine eindeutigen Aussagen über den verwendeten Kraftstoff. Vielmehr dient das Verfahren hauptsächlich zur Verbesserung der Laufruhe.

In DE 199 55 796 B4 werden Kraftstoffe durch eine winkelaufgelöste Beschleunigungsmessung der Kurbelwelle und damit der freigesetzten Energie unterschieden. Analog zu der Patentschrift DE 100 15 162 A1 ermöglicht dieses Verfahren nur die Bestimmung des volumetrischen Heizwertes mit ausreichender Genauigkeit, die Bestimmung der Viskosität oder Kompressibilität ist nicht möglich, d.h. eindeutige Aussagen über den verwendeten Kraftstoff sind auch hier nicht möglich. Vielmehr dient dieses Verfahren ebenfalls hauptsächlich der Verbesserung der Laufruhe.

In DE 40 19 083 A1 ist ein Verfahren beschrieben, in dem die Kraftstoffqualität mittels eines Lambda- oder Kraftstoffqualitätssensors bestimmt und die Motorparameter entsprechend dieser Information verändert werden. Der Nachteil dieser Sensoren besteht darin, dass sie sehr empfindlich und teuer sind.

Weiter befassen sich die in der WO 2005/021952 A1 und der WO 2008/007128 A1 beschriebenen Verfahren damit, die Kraftstoffqualität bzw. Kraftstoffart durch eine Schwingungsanalyse zu ermitteln, indem eine Schwingung in den Kraftstoff eingekoppelt wird und dann das Schwingungsverhalten durch entsprechende Schwingungsaufnehmer aufgenommen und nachfolgend analysiert wird. In Abhängigkeit vom Ergebnis der Schwingungsanalyse wird auf eine Kraftstoffqualität bzw. Kraftstoffart geschlossen. Weiter wird vorgeschlagen in Abhängigkeit von der festgestellten Kraftstoffqualität bzw. der Abweichung von einer Kraftstoffreferenzqualität Einspritzzeitpunkte und/oder Einspritzmengen variiert. Diese Vorgehensweise ist jedoch nicht geeignet, auf kritische Abweichungen der Abgasrohemission von einer Soll Abgasrohemission zu reagieren.

Das Dokument EP 1 775 584 A2 betrifft ein Verfahren sowie eine Vorrichtung zur Beurteilung der Qualität des Kraftstoffs, der in einer Brennkraftmaschine momentan verbrannt wird. Dazu wird daher vorgeschlagen, mit Hilfe eines Sensors, mit dem beispielsweise den Verlauf des Brennraumdrucks und/oder einen Lambdawert erfasst wird, und mit Hilfe eines Algorithmus einen kraftstoffspezifischen Faktor k zu ermitteln. In weiterer Ausgestaltung werden mit Hilfe des Faktors k die Betriebsparameter (Einspritzmenge, Einspritzbeginn, Einspritzende, Einspritzmuster, Abgasrückführrate usw.) korrigiert.

Ferner offenbart die DE 103 27 978 A1 ein mit einem Kraftstoff betriebenes Antriebssystem mit einem Verbrennungsmotor für ein Kraftfahrzeug mit einer Recheneinrichtung zur Bestimmung der Qualität des Kraftstoffes sowie ein Verfahren zur Bestimmung der Qualität des Kraftstoffes. Das derartige Antriebssystem kann dabei ein dem Verbrennungsmotor nachgeordnetes Abgassystem zum Abführen eines durch die Verbrennung eines Kraftstoffes entstehenden Abgasgemisches aus zumindest zwei Abgasen aufweisen, wobei das Abgassystem eine Abgassensoranordnung zur Messung der Menge zumindest eines mittels des Abgassystems abgeführten Abgases aufweist und wobei die Recheneinrichtung zur Bestimmung der Qualität des Kraftstoffes in Abhängigkeit der Menge zumindest eines Abgases ausgebildet ist.

Letztlich betrifft die EP 2 037 112 A1 ein Kraftstoffunterscheidungssystem, das unterscheidet, ob es sich bei dem einer Arbeitsmaschine zugeführten Kraftstoff um den normalen Kraftstoff handelt oder nicht, und auf Basis des Unterscheidungsergebnisses einen geeigneten Steuerungsvorgang durchführt. Dazu misst eine Kraftstoffbeschaffenheitserfassungseinrichtung die Beschaffenheit des zugeführten Kraftstoffs zu einem vorbestimmten Zeitpunkt. Eine Messdatenerzeugungseinrichtung erzeugt Messdaten auf der Grundlage des Messergebnisses sowie der verbleibenden Kraftstoffmenge und der Umgebungstemperatur. Basierend auf dem Ergebnis der Analyse der gemessenen Daten führt ein Mittel zur Analyse der gemessenen Daten eine Beschränkung der Motorleistung, eine Warnung an den Benutzer und eine Änderung der Bewertung des Benutzers durch.

Zudem werden die Sensoren üblicherweise dazu herangezogen, die Laufruhe des Motors und/oder das Startverhalten zu verbessern, eine Anpassung der Emissionen wird nicht beschrieben, ebenso wenig der Einfluss von nicht zugelassenem Kraftstoff auf die Motoröleigenschaften.

Hiervon ausgehend liegt der Erfindung die Aufgabe zugrunde, zur Optimierung der Wirkung des Abgasnachbehandlungssystems und zu dessen Schonung die Kraftstoffeigenschaften zu erfassen. Diese Aufgabe wird gelöst gemäß dem kennzeichnenden Teil von Anspruch 1.

Der Kern der Erfindung besteht darin, aus den sich bei diskontinuierlicher Förderung und/oder Kraftstoffentnahme im Kraftstoffsystem ausbildenden Druckschwingungen auf die verwendete Kraftstoffsorte und/oder die Abgasemissionen zu schließen. Diese Druckschwingungen werden von der Dichte, der Viskosität, der Schallgeschwindigkeit und der Kompressibilität des verwendeten Kraftstoffs beeinflusst. Werden diese Schwingungen nun mit Hilfe eines Drucksensors aufgenommen und diese in einer elektronischen Kontrolleinheit ausgewertet, so steht eine sehr einfache und billige Möglichkeit zur Differenzierung unterschiedlicher Kraftstoffe zur Verfügung. Mit Hilfe dieser Informationen kann auf die Abgasemissionen, die sich aus dem aktuell verwendeten Kraftstoff ergibt, geschlossen werden.

Führt der nicht zugelassene Kraftstoff zu einer dauerhaften und irreversiblen Veränderung der Emissionen, ist es mit Hilfe der festgestellten Art des verwendeten Kraftstoffs und der Betriebsdauer möglich, diese Veränderungen abzuschätzen.

Dabei können die Frequenzen der Schwingung, auch höherer Ordnung, deren Maxima, der Druckanstieg und/oder der Druckabfall als Bewertungsgröße herangezogen werden. Zur einfachen Auswertung der Frequenzen bietet es sich an, eine Fouriertransformation, insbesondere eine diskrete und/ oder schnelle Fouriertransformation, des gemessenen Drucksignals durchzuführen.

Sind die Kraftstofffördereinrichtungen systembedingt bereits mit einem Sensor auf der Hochdruckseite ausgerüstet, kann dieser für die Sensierung des Druckverlaufs verwendet werden. Dies ist beispielsweise bei Speichereinspritzsystemen, wie dem Common- Rail- System, der Fall, bei denen der Kraftstoff in einen Druckspeicher, das sogenannte Rail, auf einen bestimmten Druck gefördert und über Injektoren, die meist einzeln angesteuert werden, dem Brennraum zugeführt wird. Um eine optimale Performance des Systems sicherzustellen und eine Beschädigung durch zu hohe Kraftstoffdrücke zu vermeiden, wird der Druck auf der Hochdruckseite ermittelt und eingeregelt.

Da die Viskosität von der Temperatur des Mediums abhängt, ist es sinnvoll, die Temperatur des Kraftstoffs mit Hilfe eines Temperatursensors zu bestimmen.

Bei der Förderung des Kraftstoffs auf den Einspritzdruck kommt es auf Grund von Reibung in der Kraftstoffpumpe und der Verrichtung von Kompressionsarbeit zu einem Anstieg der Kraftstofftemperatur. Da der Temperaturanstieg von der Wärmekapazität des Kraftstoffs abhängt, kann dies dazu dienen, die Bestimmung der Kraftstoffsorte weiter zu verfeinern. Hierfür wird die Kraftstofftemperatur auf der Niederdruck- und auf der Hochdruckseite der Pumpe bestimmt und aus der Temperaturdifferenz und dem geförderten Kraftstoffvolumen bzw. dem Kraftstoffmassenstrom die Wärmekapazität bestimmt.

Für die Ermittlung der Temperatur auf der Niederdruckseite kann in erster Näherung auch die Umgebungstemperatur oder die Temperatur im Kraftstofftank herangezogen werden.

Wurde die Kraftstoffsorte und/oder eine Abweichung von der Norm festgestellt, kann diese Information in einer elektronischen Kontrolleinheit gespeichert und gegebenenfalls zu einem späteren Zeitpunkt ausgelesen werden.

Da die Herstellergarantie sich üblicherweise darauf beschränkt, dass die Brennkraftmaschine mit zugelassenem Kraftstoff betrieben wird, kann diese Funktion als Nachweis der korrekten Betankung dienen.

Auch eine Anzeige der Kraftstoffsorte und/oder eine Information über die Verwendung von nicht zugelassenem Kraftstoff mit Hilfe einer optischen Anzeigeeinheit ist möglich.

Wurde eine Abweichung der Abgasemissionen durch die Verwendung von Nicht-Referenzkraftstoff festgestellt, ist es möglich, diese durch Variation der Betriebsparameter des Motors und/oder des Nachbehandlungssystems den Emissionen bei Verwendung von Standardkraftstoff anzupassen. So können durch Veränderung von Motorparametern, wie Einspritzzeitpunkt und/oder Einspritzdruck und/oder Abstände von geteilten Einspritzungen und/oder Einspritzdauern von geteilten Einspritzungen und/oder der Abgasrückführungsrate und/oder des Kraftstoff-/Luft-Verhältnisses die Emissionen wieder dem Niveau des Normkraftstoffs angeglichen werden.

Bei Verwendung eines Nachbehandlungssystems zur Einhaltung der Emissionen können die Stellgrößen zur Einhaltung der Emissionen ebenfalls entsprechend verändert werden. So kann bei SCR-Systemen, also bei selektiver katalytischer Reduktion von Stickoxiden, beispielsweise die zugeführte Reduktionsmittelmenge variiert werden. Bei NOₓ-Speicherkatalysatoren und Partikelfiltern ist es möglich, das Verhältnis zwischen Speicherung und Regeneration zu verändern.

Auch eine Veränderung von Motor- und Nachbehandlungsparametern ist denkbar, indem z.B. über Veränderungen auf der Motorseite, wie Veränderung des Einspritzzeitpunktes, der Einspritzmenge, der Einspritzintervalle, der Abgasrückführungsrate usw., die Abgastemperatur und/oder die Abgasmasse verändert wird. Da die Temperatur und die durch das Nachbehandlungssystem geleitete Abgasmasse in engem Zusammenhang mit den zu erreichenden Umsätzen steht, resultiert daraus eine Veränderung der Umsatzfähigkeit des Nachbehandlungssystems.

Außerdem ist es denkbar, über die Dauer und/oder die kumulierte Menge des nicht zugelassenen Kraftstoffs auf die langfristige Veränderung der Abgasemissionen zu schließen. Dies kann beispielsweise durch ein verstärktes Verkoken der Einspritzdüsen und/oder eine beschleunigte chemische Deaktivierung des Nachbehandlungssystems verursacht werden. Der anschließende Einsatz von zugelassenem Kraftstoff führt auf Grund dieser irreversiblen Schädigungen meist nicht mehr zu den Emissionen vor der Verwendung des nicht zugelassenen Kraftstoffs.

Auch hier ist ein Gegensteuern durch Veränderung der Betriebsparameter des Motors und/oder des Nachbehandlungssystems denkbar.

Durch den Betrieb des Motors mit nicht zugelassenem Kraftstoff kann es nötig sein, die Serviceintervalle, beispielsweise die Ölwechselintervalle oder die Wechsel- und Reinigungsintervalle von Einspritzdüsen, Verdichtern, Kühlern etc., zu verkürzen, da es ansonsten zu einer langfristigen Veränderung der Emissionen kommt. Diese geänderten Serviceintervalle zu ermitteln und dem Betreiber anzuzeigen, stellt eine weitere Möglichkeit zur Anwendung des Verfahrens dar.

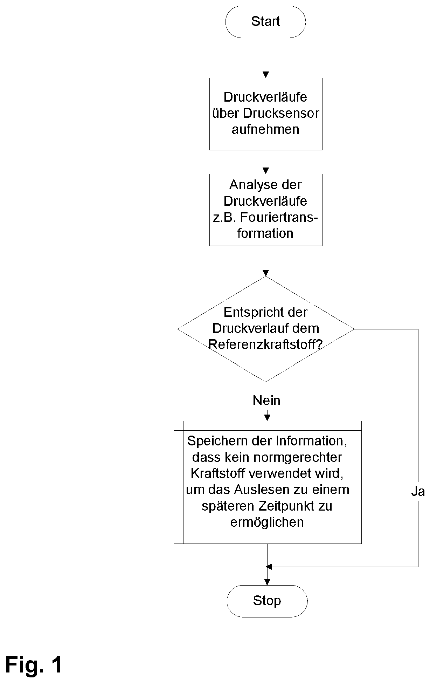

Zur weiteren Erläuterung der im Vorstehenden angesprochenen Steuerungsabläufe werden nachfolgend einige Abläufe beispielhaft mit Hilfe von Blockdiagrammen nach den Figuren 1 bis 5 beschrieben. Dabei wird davon ausgegangen, dass die beschriebenen Steuerungsabläufe in übergeordnete Steuerungsroutinen eingebettet sind, die mit Hilfe eines elektronischen Motorsteuersystems ausgeführt werden, das bei modernen Motoren üblicherweise zur Motorsteuerung vorhanden ist.

Das Blockdiagramm nach Fig. 1 (keine Ausführungsform der vorliegenden Erfindung) zeigt einen Ablauf zur Ermittlung der Verwendung eines nicht zugelassenen Kraftstoffes und die Speicherung einer diesbezüglichen Information zum späteren Abruf.

Nach dem Start des Steuerungsablaufes werden zu vorgegebenen Zeitpunkten Druckverläufe im Kraftstoffsystem mittels eines oder mehrerer Drucksensoren aufgenommen. Die Zeitpunkte sind dabei so gewählt, dass über die Druckverläufe eine Aussage über den im Kraftstoffsystem befindlichen Kraftstoff möglich ist. Im nächsten Schritt wird der ermittelte Druckverlauf mittels eines Analyseverfahrens, z.B. einer Fouriertransformation des Druckverlaufs so aufbereitet, dass die gewonnen Informationen auf einfache Weise mit charakteristischen gespeicherten Informationen eines zugelassenen Referenzkraftstoffes verglichen werden können. Dieser Vergleich findet im nächsten Schritt statt. In Abhängigkeit vom Vergleichsergebnis erfolgt bei Übereinstimmung der gewonnenen Informationen mit den gespeicherten Informationen die Beendigung des Steuerungsablaufes. Bei nicht Übereinstimmung hingegen erfolgt die Abspeicherung einer Information, dass kein zugelassener Kraftstoff verwendet wird. Parallel dazu ist die Abspeicherung des Zeitpunktes zu dem die Nichtübereinstimmung festgestellt wurde denkbar, da entsprechende Motorsteuersysteme üblicherweise eine Zeiterfassungseinrichtung beinhalten, die zur Feststellung des Zeitpunktes abgefragt werden kann. Nach erfolgter Abspeicherung wird der Steuerungsablauf ebenfalls beendet.

Durch Abfragen der Speicherwerte ist zu einem späteren Zeitpunkt der Umstand der Verwendung eines nicht zugelassenen Kraftstoffes und gegebenenfalls die Zeitdauer der Verwendung feststellbar.

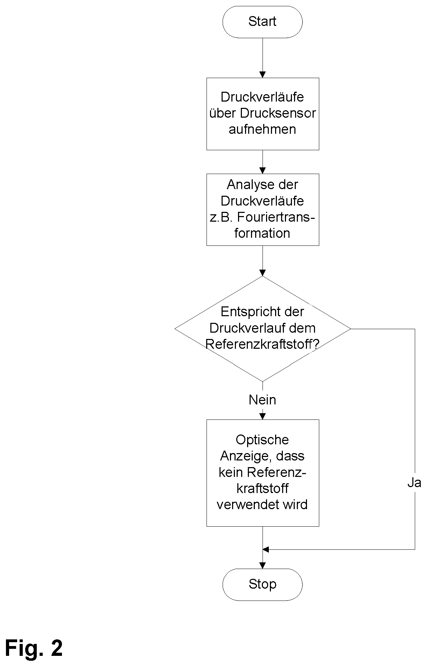

In Abwandlung des vorstehend beschriebenen Beispiels besteht die Möglichkeit, den Umstand, dass ein nicht zugelassener Kraftstoff verwendet wird, direkt zur Anzeige zu bringen, um z.B. eine Bedienperson zu informieren oder zu alarmieren. Einen entsprechenden Steuerungsablauf zeigt Fig. 2. Hier sind die ersten drei Steuerschritte identisch mit den zum Blockdiagramm gemäß Figur1 beschriebenen, es wird auf die entsprechenden Beschreibungsteile verwiesen. Danach erfolgt bei Übereinstimmung der gewonnenen Informationen mit den gespeicherten Informationen die Beendigung des Steuerungsablaufes. Bei nicht Übereinstimmung hingegen erfolgt die Anzeige einer Information, dass kein zugelassener Kraftstoff verwendet wird. Die Anzeige kann optisch und/ oder akustisch und/ oder taktil erfolgen und so lange bestehen bleiben, wie sich nicht zugelassener Kraftstoff im Kraftstoffsystem befindet.

Selbstverständlich ist auch eine Kombination der Steuerungsabläufe nach den Blockdiagrammen gemäß den Figuren 1 und 2 denkbar, in diesem Fall werden der Steuerschritt zur Abspeicherung der Information dass kein zugelassener Kraftstoff verwendet wird und der Steuerschritt zur Anzeige dieses Umstandes parallel oder nacheinander ausgeführt.

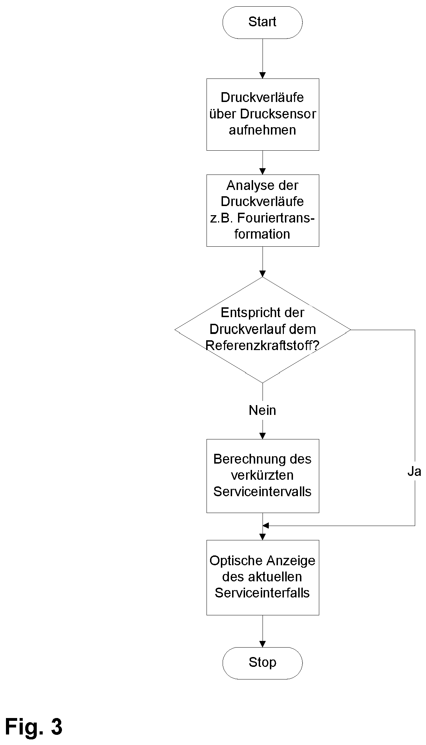

Wie bereits oben beschrieben, kann die Verwendung eines nicht zugelassenen Kraftstoffes zu einer Verkürzung der einzuhaltenden Serviceintervalle z.B. eines motorbetriebenen Fahrzeugs führen. Um dieser Gefahr zu begegnen besteht gemäß dem Blockdiagramm nach Fig. 3 die Möglichkeit, nach erfolgter Feststellung, dass ein nicht zugelassener Kraftstoff verwendet wird, in einem entsprechenden Steuerschritt die Verkürzung des Serviceinterwalls zu berechnen und in einem weiteren Steuerschritt den berechneten neuen Serviceintervall anzuzeigen. Die Steuerschritte zur Feststellung des Unstandes, dass ein nicht zugelassener Kraftstoff verwendet wird, sind identisch zu den entsprechenden in Verbindung mit dem Blockdiagramm nach Figur 1 beschriebenen Steuerschritten, so dass sich eine nochmalige Beschreibung erübrigt.

Selbstverständlich lässt sich der Steuerungsablauf gemäß dem Blockdiagramm nach Figur 3 mit den Steuerungsabläufen gemäß den Blockdiagrammen nach den Figuren 1 und/ oder 2 kombinieren.

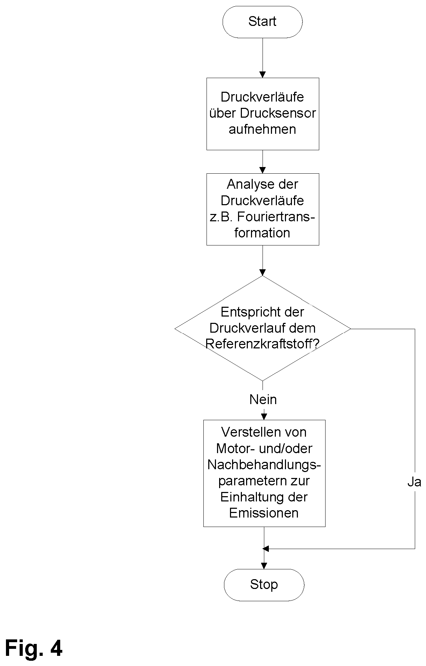

Weiter kann bei Verwendung eines nicht zugelassenen Kraftstoffes in einem Motor, wie ebenfalls oben bereits angesprochen, die Notwendigkeit bestehen, die Betriebsparameter des Motors und/ oder des Abgasnachbehandlungssystems durch Veränderung der Einstellungen anzupassen, um z.B. die zulässigen Emissionen eines Motors einzuhalten. Ein entsprechender Steuerungsablauf ist im Blockdiagramm gemäß Fig. 4 (keine Ausführungsform der vorliegenden Erfindung) gezeigt.

Auch in diesem Beispiel ist zunächst festzustellen, ob der ermittelte Druckverlauf dem Druckverlauf des Referenzkraftstoffes entspricht. Die hierzu durchzuführenden Steuerschritte sind identisch mit den entsprechenden zum Blockdiagramm nach Figur 1 beschriebenen, es wird deshalb auf die diesbezüglichen Beschreibungsteile zu Figur 1 verwiesen. Wird festgestellt, dass der ermittelte Druckverlauf nicht dem Druckverlauf des Referenzkraftstoffes entspricht, wird in einem weiteren Steuerschritt mit Hilfe gespeicherter Einstellwerte und/ oder mit Hilfe aktivierbarer Regelkreise die Schadstoffemissionen auf ein zulässiges Maß zurückgeführt. Entsprechende Regel- bzw. Steuermechanismen sind in der Fachliteratur ausführlich beschrieben, so dass es keiner weiteren Erläuterung bedarf. Motorbetriebsparameter die zur Schadstoffminimierung herangezogen werden können sind unter anderem der Einspritzzeitpunkt, die Einspritzmenge, die Einspritzintervalle, die Abgasrückführungsrate, die Abgastemperatur, die Abgasmasse, usw.

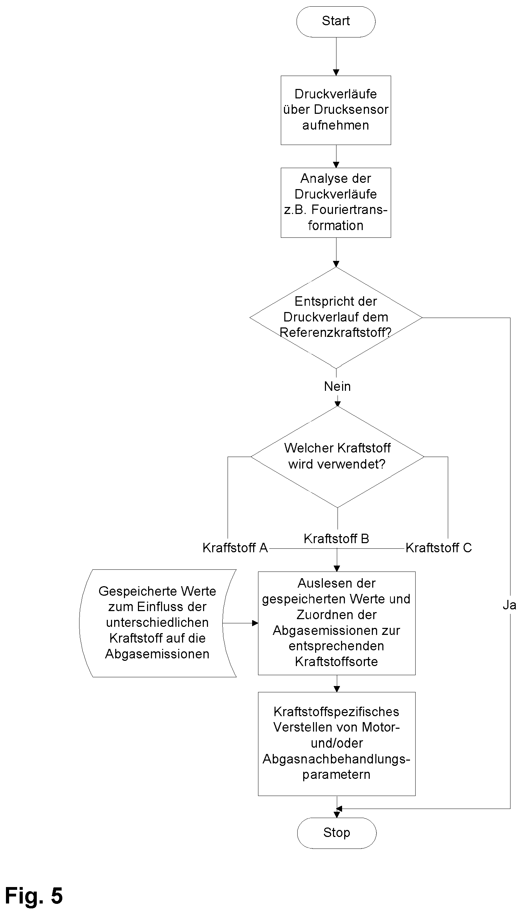

Nachdem auf dem Markt üblicherweise eine begrenzte Anzahl verwendbarer Kraftstoffe erhältlich ist, kann zur Einstellung der Betriebsparameter der Brennkraftmaschine bzw. des Abgasnachbehandlungssystems der Brennkraftmaschine auch entsprechend dem Beispiel nach dem Blockdiagramm gemäß Fig. 5 (keine Ausführungsform der vorliegenden Erfindung) vorgegangen werden. Der dort dargestellte Steuerungsablauf ist in den ersten Schritten bis zur Abfrage, ob der festgestellte Druckverlauf mit dem Druckverlauf des Referenzkraftstoffes übereinstimmt, identisch zu dem in Verbindung mit dem Blockdiagramm nach Figur 1 beschriebenen, so dass auch hier auf die entsprechende Beschreibung zum Beispiel nach Figur 1 verwiesen wird. Wurde in der angesprochenen Abfrage festgestellt, dass der ermittelte Druckverlauf nicht mit dem Druckverlauf des Referenzkraftstoffes übereinstimmt, erfolgt ein weiterer Vergleich mit gespeicherten weiteren Druckverläufen, die bekannten Kraftstoffen entsprechen. Wird eine Übereinstimmung gefunden, werden die zugehörigen Betriebsparameter für den Motor und gegebenenfalls das Abgasnachbehandlungssystem aus einem Speicher ausgelesen und zur Steuerung von Motor und Abgasnachbehandlungssystem herangezogen, so dass eine kraftstoffspezifische Verstellung der Motor und Abgasnachbehandlungsparameter erfolgt.

Selbstverständlich lassen sich die Steuerungsabläufe nach den Blockdiagrammen gemäß der Figuren 4 und 5 kombinieren, wodurch auch bei vorliegen eines unbekannten Kraftstoffes eine Schadstoffminimierung gemäß dem Beispiel nach Figur 4 möglich wird, dies stellt jedoch keine Ausführungsform der vorliegenden Erfindung dar.

Weiterhin lassen sich die Steuerungsabläufe nach Figur 4 und 5 bzw. eine Kombination daraus mit den Steuerungsabläufen nach den Figuren 1 bis 3 in beliebiger Weise kombinieren, dies stellt jedoch keine Ausführungsform der vorliegenden Erfindung dar.

## Patentansprüche

1. Verfahren zur Bestimmung der Abweichung der Qualität eines Kraftstoffs von einer Referenzqualität und der dadurch bedingten Veränderung der Abgasemissionen durch Auswertung von Druckwellen im Kraftstoffsystem, wobei
- die Brennkraftmaschine mit einer diskontinuierlichen Kraftstoffförderung und/oder Kraftstoffentnahme ausgerüstet ist bzw. wird,
- während des Betriebs die sich im Kraftstoffsystem ausbildenden Druckschwingungen mit Hilfe mindestens eines Sensors detektiert werden,
- durch die Analyse dieses Druckverlaufs in einer elektronischen Kontrolleinheit die Abweichung von einer Kraftstoffreferenzqualität ermittelt werden, **dadurch gekennzeichnet, dass**
- aus der Abweichung von einer Kraftstoffreferenzqualität Abweichungen der Rohemissionen der Brennkraftmaschine von den Rohemissionen bei Verwendung des Referenzkraftstoffs und/oder Einflüsse auf das im Vergleich zum Betrieb mit Referenzkraftstoff veränderte Verhalten eines der Brennkraftmaschine nachgeschalteten Nachbehandlungssystems bestimmt werden, und
- bei Ermittlung einer Abweichung von der Referenzkraftstoffqualität:
a) ein Serviceintervall verändert wird und das veränderte Serviceintervall zur Anzeige gebracht wird, wobei vorzugsweise das Serviceintervall ein Ölwechselintervall oder ein Wechsel- und Reinigungsintervall von Einspritzdüsen, Verdichtern, Kühlern ist; und/oder
b) eine Information über die Verwendung eines vom Referenzkraftstoff abweichenden Kraftstoffes zur Anzeige gebracht wird, wobei vorzugsweise die Anzeige optisch und/oder akustisch und/oder taktil erfolgt und so lange bestehen bleibt, wie sich der vom Referenzkraftstoff abweichende Kraftstoff im Kraftstoffsystem befindet.

2. Verfahren nach einem der vorangegangen Ansprüche, **dadurch gekennzeichnet, dass** die Dauer der Abweichung von der Kraftstoffqualität und/oder deren Häufigkeit und/oder deren erstes und/oder letztes Auftreten in einer elektronischen Kontrolleinheit gespeichert wird.

3. Verfahren nach Anspruch 2, **dadurch gekennzeichnet, dass** mit Hilfe dieser gespeicherten Informationen auf den Grad einer chemischen und/oder thermischen Deaktivierung des Nachbehandlungssystems und/oder eine langfristige Veränderung der Emissionen geschlossen wird.

4. Verfahren nach einem der vorangegangen Ansprüche **dadurch gekennzeichnet, dass** durch die Analyse dieses Druckverlaufs in einer elektronischen Kontrolleinheit die Kraftstoffsorte ermittelt wird.

5. Verfahren nach Anspruch 4 **dadurch gekennzeichnet, dass** die Kraftstoffsorte in einer elektronischen Kontrolleinheit gespeichert wird.

6. Verfahren nach einem der vorangegangenen Ansprüche, **dadurch gekennzeichnet, dass** eine Veränderung von Betriebsparametern der Brennkraftmaschine durchgeführt wird, wobei die Betriebsparameter der Brennkraftmaschine in Abhängigkeit von den aus den Druckschwingungen gewonnen Informationen so verändert werden, dass die Emissionen denen bei Verwendung des Referenzkraftstoffs zumindest angenähert sind.

7. Verfahren nach Anspruch 6, **dadurch gekennzeichnet, dass** die Emissionen bei Verwendung eines Nicht-Referenzkraftstoffs an die Emissionen bei Verwendung des Referenzkraftstoffs dadurch angepasst werden, dass der Einspritzdruck und/oder der Einspritzzeitpunkt und/oder die Anzahl der Einspritzungen des Kraftstoffs pro Einspritzvorgang und/oder die Abgasrückführungsrate und/oder das Kraftstoff-/LuftVerhältnis und/oder die Ventilsteuerzeiten verändert werden.

8. Verfahren nach einem der vorangegangenen Ansprüche, **dadurch gekennzeichnet, dass** der mindestens eine Sensor auf der Hochdruckseite der Kraftstofffördereinrichtung angeordnet ist, wobei das Sensorsignal auch als Führungsgröße zur Regelung des Kraftstoffdrucks auf der Hochdruckseite dient.

9. Verfahren nach einem der vorangegangenen Ansprüche, **dadurch gekennzeichnet, dass** zusätzlich die Kraftstofftemperatur mit Hilfe mindestens eines weiteren Sensors ermittelt und zur Bestimmung der Abweichung der Qualität eines Kraftstoffs von einer Referenzqualität und/oder der Kraftstoffsorte herangezogen wird.

10. Verfahren nach einem der vorangegangenen Ansprüche, **dadurch gekennzeichnet, dass** die Temperaturdifferenz zwischen der Niederdruck- und der Hochdruckseite der Kraftstofffördereinrichtung mit Hilfe von Sensoren ermittelt und zur Bestimmung der Abweichung der Qualität eines Kraftstoffs von einer Referenzqualität und/oder der Kraftstoffsorte herangezogen wird.

11. Verfahren nach einem der vorangegangenen Ansprüche, **dadurch gekennzeichnet, dass** die aus den Druckschwingungen gewonnenen Informationen gespeichert werden.

12. Verfahren nach einem der vorangegangenen Ansprüche, **dadurch gekennzeichnet, dass** der Druckverlauf für die Analyse in einer elektronischen Steuereinheit einer Fouriertransformation und/oder einer diskreten Fouriertransformation und/ oder einer schnellen Fouriertransformation unterzogen wird.

## Claims

1. Method for determining the deviation of the quality of a fuel from a reference quality and the resulting change in exhaust gas emissions by analysing pressure waves in the fuel system, wherein
- the internal combustion engine is or is equipped with discontinuous fuel delivery and/or fuel extraction,
- during operation, the pressure oscillations forming in the fuel system are detected with the aid of at least one sensor,
- the deviation from a fuel reference quality is determined by analysing this pressure curve in an electronic control unit, **characterised in that**
- deviations of the raw emissions of the internal combustion engine from the raw emissions when using the reference fuel and/or influences on the changed behaviour of an aftertreatment system downstream of the internal combustion engine compared to operation with reference fuel are determined from the deviation from a fuel reference quality, and
- when determining a deviation from the reference fuel quality:
a) a service interval is changed and the changed service interval is displayed, wherein preferably, the service interval is an oil change interval or a change and cleaning interval of injection nozzles, compressors, coolers; and/or
b) information about the use of a fuel that differs from the reference fuel is displayed, whereby preferably, the display is visual and/or audible and/or tactile and remains as long as the fuel that differs from the reference fuel is in the fuel system.

2. Method according to one of the preceding claims, **characterised in that** the duration of the deviation from the fuel quality and/or its frequency and/or its first and/or last occurrence is stored in an electronic control unit.

3. Method according to claim 2, **characterised in that** this stored information is used to infer the degree of chemical and/or thermal deactivation of the aftertreatment system and/or a long-term change in emissions.

4. Method according to one of the preceding claims, **characterised in that** the fuel type is determined by analysing this pressure curve in an electronic control unit.

5. Method according to claim 4, **characterised in that** the fuel type is stored in an electronic control unit.

6. Method according to one of the preceding claims, **characterised in that** a change in operating parameters of the internal combustion engine is carried out, wherein the operating parameters of the internal combustion engine are changed as a function of the information obtained from the pressure oscillations such that the emissions are at least approximated to those when using the reference fuel.

7. Method according to claim 6, **characterised in that** the emissions when using a non-reference fuel are adapted to the emissions when using the reference fuel by changing the injection pressure and/or the injection timing and/or the number of injections of the fuel per injection process and/or the exhaust gas recirculation rate and/or the fuel/air ratio and/or the valve timing.

8. Method according to one of the preceding claims, **characterised in that** the at least one sensor is arranged on the high-pressure side of the fuel delivery device, the sensor signal also serving as a reference variable for controlling the fuel pressure on the high-pressure side.

9. Method according to one of the preceding claims, **characterised in that** the fuel temperature is additionally determined with the aid of at least one further sensor and is used to determine the deviation of the quality of a fuel from a reference quality and/or the fuel type.

10. Method according to one of the preceding claims, **characterised in that** the temperature difference between the low-pressure side and the high-pressure side of the fuel delivery device is determined with the aid of sensors and is used to determine the deviation of the quality of a fuel from a reference quality and/or the fuel type.

11. Method according to one of the preceding claims, **characterised in that** the information obtained from the pressure oscillations is stored.

12. Method according to one of the preceding claims, **characterised in that** the pressure curve for the analysis in an electronic control unit is subjected to a Fourier transform and/or a discrete Fourier transform and/or a fast Fourier transform.

## Revendications

1. Procédé permettant de déterminer un écart de la qualité d'un carburant par rapport à une qualité de référence et la modification des émissions de gaz d'échappement engendrée par l'évaluation d'ondes de pression dans le système de carburant, dans lequel
- le moteur à combustion interne est ou sera équipé d'un dispositif d'alimentation en carburant et/ou d'un dispositif de prélèvement de carburant discontinus,
- en cours de fonctionnement, les oscillations de pression créées dans le système de carburant sont détectées à l'aide d'au moins un capteur,
- l'analyse de cette courbe de pression dans une unité de contrôle électronique permet de déterminer l'écart par rapport à une qualité de référence de carburant, **caractérisé**
- **en ce qu'**à partir de l'écart par rapport à une qualité de référence de carburant, des écarts des émissions brutes du moteur à combustion interne par rapport aux émissions brutes en cas d'utilisation du carburant de référence sont déterminés, et/ou des influences sur le comportement d'un système de post-traitement placé en aval du moteur à combustion interne, modifié en comparaison avec le fonctionnement avec le carburant de référence, sont déterminées, et
- **en ce que** lors de la détermination d'un écart par rapport à la qualité de carburant de référence :
a) un intervalle d'entretien est modifié et l'intervalle d'entretien modifié est affiché, l'intervalle d'entretien étant de préférence un intervalle de vidange d'huile ou un intervalle de remplacement et de nettoyage des injecteurs, compresseurs, refroidisseurs ; et/ou
b) une information concernant l'utilisation d'un carburant différent du carburant de référence est affichée, l'affichage étant de préférence optique et/ou acoustique et/ou tactile et demeurant tant que le carburant différent du carburant de référence se trouve dans le système de carburant.

2. Procédé selon l'une quelconque des revendications précédentes, **caractérisé en ce que** la durée de l'écart par rapport à la qualité de carburant et/ou sa fréquence et/ou sa première et/ou sa dernière occurrence sont mémorisées dans une unité de contrôle électronique.

3. Procédé selon la revendication 2, **caractérisé en ce que** ces informations mémorisées permettent de conclure au degré d'une désactivation chimique et/ou thermique du système de post-traitement et/ou à une modification à long terme des émissions.

4. Procédé selon l'une quelconque des revendications précédentes, **caractérisé en ce que** l'analyse de cette courbe de pression dans une unité de contrôle électronique permet de déterminer le type de carburant.

5. Procédé selon la revendication 4, **caractérisé en ce que** le type de carburant est mémorisé dans une unité de contrôle électronique.

6. Procédé selon l'une quelconque des revendications précédentes, **caractérisé en ce qu'**une modification des paramètres de fonctionnement du moteur à combustion interne est effectuée, les paramètres de fonctionnement du moteur à combustion interne étant modifiés en fonction des informations obtenues à partir des oscillations de pression de telle sorte que les émissions sont rendues au moins similaires à celles en cas d'utilisation du carburant de référence.

7. Procédé selon la revendication 6, **caractérisé en ce que** les émissions en cas d'utilisation d'un carburant de non-référence sont adaptées aux émissions en cas d'utilisation du carburant de référence en modifiant la pression d'injection et/ou le moment d'injection et/ou le nombre des injections de carburant par processus d'injection et/ou le taux de recyclage des gaz d'échappement et/ou le rapport carburant/air et/ou les temps de commande des soupapes.

8. Procédé selon l'une quelconque des revendications précédentes, **caractérisé en ce que** ledit au moins un capteur est agencé sur le côté haute pression du dispositif d'alimentation en carburant, le signal du capteur servant également de grandeur de consigne pour la régulation de la pression de carburant sur le côté haute pression.

9. Procédé selon l'une quelconque des revendications précédentes, **caractérisé en ce qu'**en outre, la température du carburant est déterminée à l'aide d'au moins un autre capteur et est utilisée pour déterminer l'écart de la qualité d'un carburant par rapport à une qualité de référence et/ou le type de carburant.

10. Procédé selon l'une quelconque des revendications précédentes, **caractérisé en ce que** la différence de température entre le côté basse pression et le côté haute pression du dispositif d'alimentation en carburant est déterminée à l'aide de capteurs, et est exploitée pour déterminer l'écart de la qualité d'un carburant par rapport à une qualité de référence et/ou le type de carburant.

11. Procédé selon l'une quelconque des revendications précédentes, **caractérisé en ce que** les informations obtenues à partir des oscillations de pression sont mémorisées.

12. Procédé selon l'une quelconque des revendications précédentes, **caractérisé en ce que** la courbe de pression est soumise à une transformation de Fourier et/ou à une transformation de Fourier discrète et/ou à une transformation de Fourier rapide pour l'analyse dans une unité de commande électronique.
